## Europäisches Patentamt
## European Patent Office
## Office européen des brevets

(19)

(11) Numéro de publication: **0 167 193**
**B1**

(12)

# FASCICULE DE BREVET EUROPÉEN

(45) Date de publication du fascicule du brevet:
**21.06.89**

(51) Int. Cl.⁴: **G 06 F 13/36**

(21) Numéro de dépôt: **85200675.4**

(22) Date de dépôt: **17.09.82**

(54) **Système d'arbitrage des demandes d'accès de plusieurs processeurs à des ressources communes, par l'intermédiaire d'un bus commun.**

(30) Priorité: **24.09.81 FR 8118014**

(43) Date de publication de la demande:
**08.01.86 Bulletin 86/2**

(45) Mention de la délivrance du brevet:
**21.06.89 Bulletin 89/25**

(84) Etats contractants désignés:
**CH DE GB IT LI NL SE**

(56) Documents cité:
**EP-A-0 032 864**
**US-A-3 798 591**

**IEEE TRANSACTIONS ON COMPUTERS, vol. C-21, no. 1, janvier 1972, pages 37-42, New York, US; W.W. PLUMMER: "Asynchronous arbiters"**
**DIGEST OF PAPERS, FTCS-10, The 10th International Symposium on Fault-Tolerant Computing, Kyoto, Japan, 1-3 octobre 1980, pages 281-283, IEEE, New York, US; M. COURVOISIER et al.: "A self-testing arbiter circuit for multimicrocomputer systems"**
**ELECTRONIC DESIGN, vol. 11, 24 mai 1979, pages 128-133, Rochelle Park, US; S.J. DURHAM: "Fast LSI arbiters supervise priorities for bus-access in multiprocessor systems"**

(73) Titulaire: **Finger, Ulrich, 30, rue du Moulin de Pierre, F-92140 Clamart (FR)**
Titulaire: **Desprez, Pierre, 50 Avenue A. Briand, F-92220 Bagneux (FR)**
Titulaire: **Ligneres, Pierre, 80 bis, rue des Mûres, F-92160 Antony (FR)**

(72) Inventeur: **Finger, Ulrich, 30, rue du Moulin de Pierre, F-92140 Clamart (FR)**
Inventeur: **Desprez, Pierre, 50 Avenue A. Briand, F-92220 Bagneux (FR)**
Inventeur: **Ligneres, Pierre, 80 bis, rue des Mûres, F-92160 Antony (FR)**

(74) Mandataire: **Mongrédien, André, c/o BREVATOME 25, rue de Ponthieu, F-75008 Paris (FR)**

EP 0 167 193 B1

**Description**

La présente invention concerne un système d'arbitrage de l'accès de plusieurs processeurs ou microprocesseurs à un bus commun. Cette invention s'applique notamment à la gestion des accès de plusieurs processeurs ou microprocesseurs à des ressources communes, telles que des mémoires par exemple.

Dans le domaine des processeurs, un problème important que les techniciens solutionnent avec plus ou moins de bonheur, est celui de l'accès de plusieurs processeurs à des ressources communes, par l'intermédiaire d'un bus commun. Ce problème présente une importance accrue depuis l'apparition des microprocesseurs puisque, compte tenu de la puissance relativement importante de ces microprocesseurs, de leur coût et de leur encombrement peu élevés, il devient de plus en plus intéressant de concevoir des systèmes multiprocesseurs et de faire accéder ces processeurs à des ressources communes, par l'intermédiaire d'un bus commun.

On sait que ce type d'accès nécessite un arbitrage en fonction de critères de priorité des demandes d'accès faites par les processeurs. Il est aussi connu de faire fonctionner un système multiprocesseur, soit de façon synchrone, soit de façon asynchrone.

Dans un système multiprocesseur fonctionnant de façon synchrone, tous les processeurs sont pilotés par la même horloge. Dans ce type de système, la longueur des bus qui permettent d'accéder à des ressources communes, par l'intermédiaire d'un bus commun, est un paramètre important puisque les différents multiprocesseurs doivent fonctionner de manière synchrone et que la longueur des bus agit sur le synchronisme. Une autre difficulté que présente la conception d'un système multiprocesseur à horloge commune réside dans les retards de phase de l'horloge commune au cours des trajets des impulsions de cette horloge dans les différents bus et circuits. Enfin, le principal inconvénient de ces systèmes synchrones résulte du fait que la disponibilité du système est étroitement liée au cycle de l'horloge commune.

Dans les systèmes multiprocesseurs où les processeurs fonctionnent de manière asynchrone, ceux-ci ne se synchronisent que lors des accès aux ressources communes. Dans un système asynchrone, il est possible d'ajouter un processeur au système existant, sans avoir à modifier les algorithmes qui commandent l'arbitrage des demandes d'accès des différents processeurs à un bus commun. Il en résulte que les systèmes multiprocesseurs asynchrones présentent des avantages importants par rapport aux systèmes synchrones.

En dehors du fait que les systèmes multiprocesseurs peuvent fonctionner soit de manière synchrone, soit de manière asynchrone, une autre différence essentielle entre ces différents systèmes réside dans les systèmes d'arbitrage des demandes d'accès de différents processeurs à des ressources communes, par l'intermédiaire d'un bus commun. Parmi les différents systèmes d'arbitrage qui peuvent être utilisés, il faut distinguer les systèmes d'arbitrage "série" et les systèmes d'arbitrage "parallèle":

- dans les systèmes d'arbitrage "série", chaque processeur comprend un circuit d'arbitrage ou arbitre dont la sortie est reliée à l'entrée de l'arbitre de priorité immédiatement inférieure. Il en résulte que les différents arbitres sont reliés en chaîne et que ces systèmes nécessitent l'utilisation d'une horloge qui gère les demandes d'accès des différents processeurs à un bus commun et qui gère également la sortie des résultats des traitements effectués par les différents processeurs. Il en résulte que le nombre des processeurs que l'on peut grouper en utilisant des systèmes d'arbitrage "série" dépend de la fréquence de l'horloge commune et des temps de retard introduits dans le système multiprocesseur par les traitements de priorité effectués par les systèmes d'arbitrage. Dans l'état actuel de la technique, une horloge qui fournit des impulsions à une fréquence de 10 MHz ne peut commander des systèmes d'arbitrage que dans un système à trois processeurs. De plus, dans ce type d'arbitrage, la priorité dépend de la position de chaque système d'arbitrage dans la chaîne de processeurs et il en résulte que le processeur qui est situé en bout de chaîne ne travaille pas dans des conditions très favorables.

- les systèmes d'arbitrage "parallèle" permettent de relier un plus grand nombre de processeurs à un bus commun, pour accéder à des ressources communes. Dans ces systèmes, chaque processeur possède une ligne de requête ou de demande d'accès au bus et une ligne qui permet de fournir le résultat de l'arbitrage. Souvent, d'autres lignes de commande viennent s'ajouter aux lignes précitées pour donner notamment l'état du système d'arbitrage (occupé, urgent).

Enfin, dans les systèmes multiprocesseurs, les priorités peuvent être traitées de différentes façons: ces priorités peuvent être fixes, rotatives ou peuvent également être à la fois fixes et rotatives.

Les systèmes d'arbitrage eux-mêmes peuvent être centralisés ou décentralisés. Un système d'arbitrage centralisé est attaché à un groupe de processeurs tandis qu'un système d'arbitrage décentralisé est attaché à chaque processeur. Un système centralisé nécessite moins de circuits qu'un système décentralisé, mais sa disponibilité détermine la disponibilité du système multiprocesseur.

Il semble qu'actuellement, le choix de l'organisation d'un système multiprocesseur, s'oriente vers les systèmes d'arbitrage parallèles, à priorité fixe, pour des raisons de rapidité, tandis que ce choix s'oriente vers les systèmes d'arbitrage à priorité série, pour des raisons de simplicité.

Enfin, des systèmes d'arbitrage de demandes d'accès à un bus commun, dans une structure multiprocesseurs, utilisent à la fois un arbitrage série et un arbitrage parallèle.

D'une manière générale, les systèmes d'arbitrage qui viennent d'être décrits, présentent les inconvénients suivants:

Le système d'arbitrage série nécessite l'utilisation d'une horloge très rapide pour permettre la connexion de plusieurs processeurs et ceci conduit à la mise au point de composants à commutation très rapide permettant de transmettre sur un bus, des signaux dont la fréquence est supérieure à 10 MHz. De plus, la priorité fixe de ces systèmes entraîne des contraintes de programmation de différents processeurs, de sorte que le processeur de priorité le plus faible risque de ne jamais accéder au bus.

Enfin, dans certains systèmes multiprocesseurs, les données sont transférées par bloc; l'accès d'un processeur à un bus commun nécessite dans ce cas, le temps de plusieurs échanges avec la mémoire, de sorte que pour accéder à un mot mémoire, ces systèmes sont très coûteux.

Les systèmes d'arbitrage parallèle sont dans la plupart des cas centralisés et il en résulte qu'ils présentent une faible disponibilité; dans ce cas, la priorité est souvent fixe pour diminuer la complexité du système d'arbitrage.

D'une manière générale, tous les arbitres connus travaillent avec une horloge qui permet d'éviter les conflits. La présence de cette horloge nécessite un temps supplémentaire de synchronisation des différents processeurs sur celle-ci (ce temps dépendant de la fréquence de l'horloge). De plus, les différents processeurs sont dépendants de l'horloge pour tout problème de disponibilité.

Des systèmes d'arbitrages tels que ceux mentionnés plus haut sont décrits dans les documents suivants:

- EP-A-32 864,
- Computer Design, volume 19, numéro 6, juin 1980, pages 103 - 109,
- Fall Joint Computer Conference, 1972, pages 719 - 740,
- Digest of Papers, FTCS-10, octobre 1 - 3, 1980, pages 281 à 283.
- IEEE Transactions on Computers, volume C-21, numéro 1, janvier 1972, pages 37 à 42,
- Electronic Design, volume 11, 24 mai 1979, pages 128 à 133.

Les deux derniers documents mentionnés ci-dessus décrivent des arbitres qui permettent de réaliser un arbitrage mixte (mélange de priorités fixes et rotatives), mais qui ne sont pas facilement adaptables à un système d'arbitrage selon le préambule de la revendication 1.

L'invention telle qu'elle est caractérisée a pour but de remédier à ces inconvénients et notamment de réaliser un système d'arbitrage des demandes d'accès de plusieurs processeurs ou microprocesseurs à des ressources communes, par l'intermédiaire d'un bus commun. Ce système permet de gérer l'arbitrage des demandes d'accès à un bus commun dans un système multiprocesseur asynchrone, afin d'éviter les inconvénients des systèmes synchrones, mentionnés plus haut. Dans le système de l'invention, l'arbitrage des demandes d'accès est parallèle, avec possibilité de priorité fixe, rotative ou mixte; l'arbitrage est décentralisé pour donner plus de souplesse au système qui permet alors de satisfaire des demandes d'accès provenant d'un nombre important de processeurs ou microprocesseurs dans un délai très court (voisin de 100 nanosecondes). Cet arbitrage est asynchrone, sans horloge commune, indépendant du type de microprocesseur raccordé au bus. Ces différents buts peuvent être atteints grâce à l'utilisation d'une mémoire PROM fusible pour la réalisation du circuit de résolution de priorité; cette mémoire permet, (de manière connue), d'encoder toutes les combinaisons possibles de priorités (fixes, rotatives ou mixtes). Dans un second mode de réalisation, les combinaisons de priorités sont obtenues par des circuits de codage et de brassage, qui comme on le verra plus loin, permettent la fabrication du système sous forme de circuit intégré dans un boîtier standard. Ce système comprend en outre un ensemble de supervision qui permet de commuter un système d'arbitrage sur un autre en cas de défaillance de l'un d'eux. Ce système très simple permet en outre un fonctionnement à priorité rotative, sans qu'il soit nécessaire de faire appel à des files d'attente de type FIFO par exemple.

L'invention à pour objet un système d'arbitrage de demande d'accès de plusieurs processeurs à des ressources communes, par l'intermédiaire d'un bus commun, comprenant pour chaque processeur un ensemble d'arbitrage des conflits de demande d'accès, cet ensemble d'arbitrage comprenant des moyens de traitement des demandes d'accès reliés au bus et au processeur et un circuit de résolution des priorités d'accès, relié au bus, aux moyens de traitement des demandes d'accès, et au processeur, ce circuit de résolution étant capable d'attribuer aux demandes d'accès des priorités fixes, rotatives, ou des priorités à la fois fixes et rotatives, les moyens de traitement des demandes d'accès comprenant un circuit de requête d'accès au bus recevant un signal indiquant une demande d'accès du processeur correspondant à l'ensemble d'arbitrage considéré, ainsi qu'un signal indiquant si d'autres processeurs ont effectué une demande d'accès, et un circuit de transmission d'un signal représentatif du verdict d'arbitrage de la demande d'accès du processeur correspondant, en fonction des priorités des autres demandes d'accès, ces circuits de requête et de transmission de verdict étant reliés au bus, au processeur et au circuit de résolution de priorités, le circuit de transmission de verdict d'arbitrage comprenant des moyens pour reconnaître si l'ensemble d'arbitrage désigné pour être maître du bus correspond à un processeur qui fournit un signal de demande d'accès et pour fournir à ce processeur un signal indiquant l'acceptation de cette demande, chaque ensemble d'arbitrage comprenant en outre un interface reliant le processeur et le circuit de transmission de verdict d'arbitrage avec le bus. L'invention est caractérisée en ce que le circuit de résolution de priorités de chaque ensemble d'arbitrage comprend en outre un ensemble de résolution de priorités qui comporte un encodeur à priorité fixe pour coder les demandes d'accès des ensembles d'arbitrage qui fonctionnent en priorité fixe et un encodeur à priorité rotative pour coder les priorités des ensembles d'arbitrage fonctionnant en priorité rotative, cet encodeur à priorité rotative comprenant au moins un encodeur à priorité fixe précédé d'un réseau de brassage circulaire des demandes d'accès et suivi d'un additionneur de la valeur +1 et du numéro (UC0, UC1, UC2) du processeur qui demande accès au bus, les entrées de l'encodeur à priorité fixe et de l'encodeur à priorité rotative étant reliées aux sorties d'un circuit logique pour aiguiller respectivement vers les encodeurs à priorité fixe et rotative, les demandes des ensembles d'arbitrage qui fonctionnent en priorité fixe et les demandes des ensembles d'arbitrage qui fonctionnent en priorité rotative; chaque circuit de résolution de priorité comprenant des moyens pour appliquer aux circuits de résolution de priorités des autres ensembles d'arbitrage, des signaux désignant l'ensemble d'arbitrage qui sera actif pour la prochaine demande d'accès au bus. Ce circuit de résolution comprend en outre un ensemble de résolution de priorité comportant au moins une mémoire PROM pour enregistrer et gérer les priorités des ensembles d'arbitrage.

Selon un mode de réalisation particulier, le système d'arbitrage comprend en outre des moyens de supervision reliés aux circuits de résolution de priorité par l'intermédiaire du bus, pour appliquer à ces circuits un signal de commande de changement d'ensemble d'arbitrage si un verdict d'arbitrage n'est pas rendu dans un délai prédéterminé.

Selon un autre mode de réalisation particulier, les moyens de supervision sont constitués par des moyens de temporisation dont l'entrée est reliée au bus pour recevoir les signaux indiquant que d'autres processeurs ont effectué des demandes d'accès, une sortie de ces moyens de temporisation fournissant le signal de changement d'ensemble d'arbitrage aux circuits de résolution de priorité si un verdict d'arbitrage n'est pas rendu dans un délai prédéterminé.

Chaque ensemble d'arbitrage comprend en outre une interface reliant le processeur et le circuit de transmission de verdict d'arbitrage, avec le bus.

Enfin, selon une autre caractéristique, chaque ensemble d'arbitrage correspondant au numéro du processeur qui demande accès au bus est réalisé sous forme d'un circuit intégré sur substrat enfermé dans un boîtier standard.

Une solution alternative, qui fait intervenir des encodeurs et un circuit de brassage fait l'objet de la demande initialé 82 401 691.9 (numéro de publication 0 076 196).

Les caractéristiques et avantages de l'invention ressortiront mieux de la description qui va suivre donnée en référence aux dessins annexés dans lesquels:

- la figure 1 est un schéma par bloc d'un système multiprocesseurs dans lequel intervient un ensemble d'arbitrage conforme à l'invention,
- la figure 2 représentée est un schéma par blocs d'un ensemble d'arbitrage relié à l'un des processeurs dans le système de l'invention,
la figure 3 est un schéma des moyens de supervision du système de l'invention,
- la figure 4 est un schéma détaillé de l'ensemble d'arbitrage du système de l'invention dans lequel intervient une mémoire PROM pour la gestion des priorités,
- la figure 5 est un chronogramme de principaux signaux qui interviennent dans le système de l'invention.

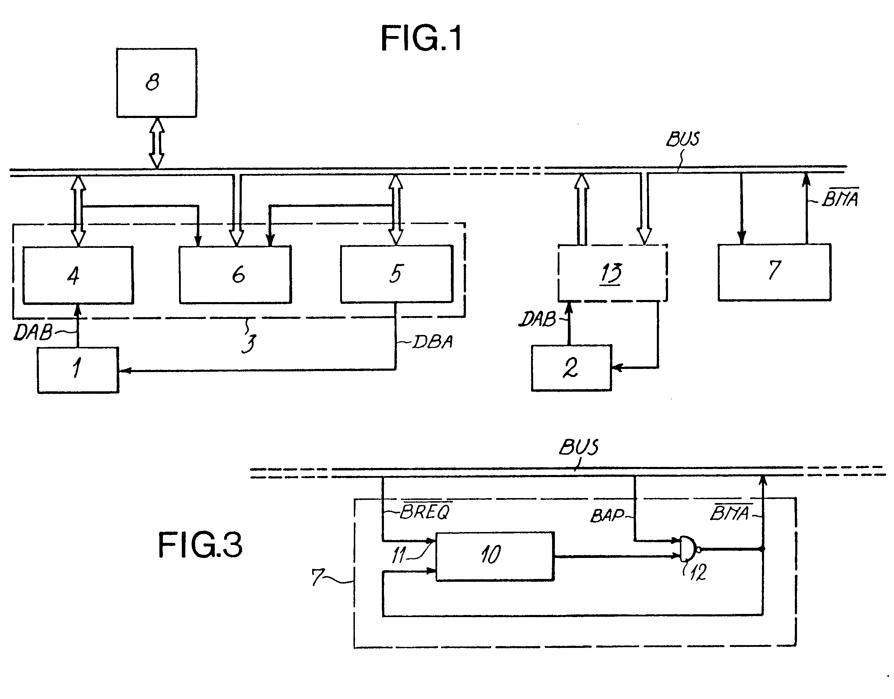

La figure 1 est un schéma par bloc du système de l'invention. Ce système permet d'arbitrer les demandes ou requêtes d'accès DAB de plusieurs processeurs 1, 2, à des ressources communes 8, par l'intermédiaire d'un bus commun de communication BUS. Bien entendu, le nombre des processeurs ou microprocesseurs a été limité à 2 dans l'exemple de réalisation représenté sur la figure, mais ce nombre peut évidemment être plus important. Les ressources communes 8 peuvent être par exemple des mémoires. Ce système comprend des ensembles d'arbitrage 3, 13, des conflits de demandes d'accès DAB; ces ensembles d'arbitrage sont reliés respectivement aux processeurs et au bus. Chacun d'eux comprend des moyens 4, 5 de traitement des demandes DAB d'acces au bus. Ces moyens de traitement sont reliés aux processeurs correspondants, ainsi qu'à un circuit de résolution 6 des priorités d'accès; le circuit de résolution 6 est relié au bus, aux moyens de traitement 4, 5 et au processeur 1. Comme on le verra plus loin en détail, ce circuit de résolution de priorités est capable d'attribuer des priorités fixes, rotatives ou des priorités à la fois fixes et rotatives, aux demandes d'accès DAB des divers processeurs. Une demande d'accès acceptée provoque l'apparition d'un signal DBA sur une sortie de l'ensemble d'arbitrage 3. Les moyens de traitement de demandes d'accès comprennent un circuit 4 de requête d'accès au bus et un circuit 5 de transmission de verdict d'arbitrage. Ces circuits seront décrits plus loin en détail. On a aussi représenté sur cette figure des moyens de supervision 7, qui seront décrits plus loin en détail, ces moyens de supervisior permettent d'appliquer aux ensembles d'arbitrage, par l'intermédiaire du bus, un signal $\overline{BNA}$; ce signal

commande le changement d'ensemble d'arbitrage en cas de défaillance de cet ensemble; ce signal apparaît lorsque cet ensemble d'arbitrage, qui est maître du bus, n'a pas rendu de verdict d'arbitrage dans un délai prédéterminé.

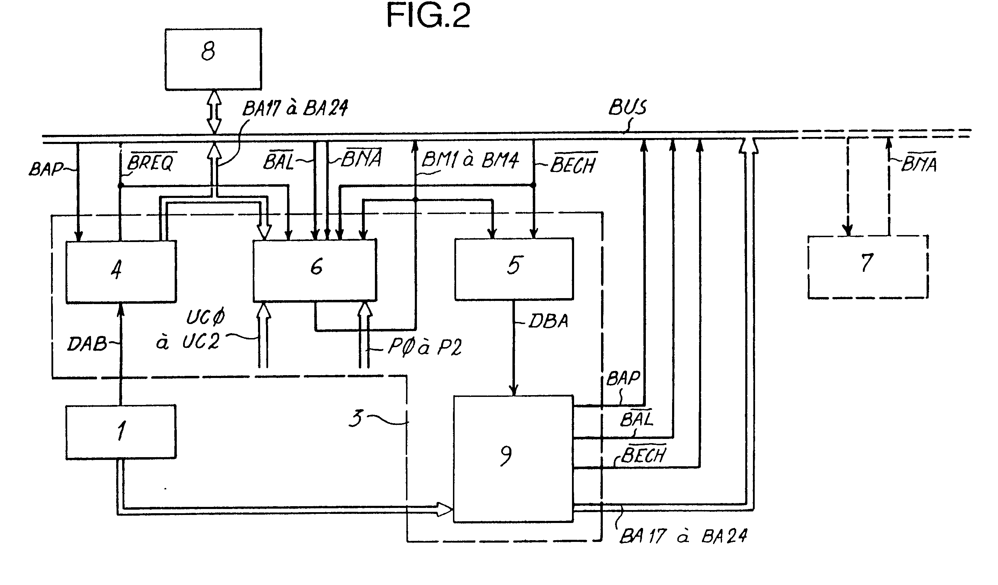

La figure 2 repésente de manière plus détaillée l'un des ensembles d'arbitrage 3 relié au processeur 1, par exemple, et au bus, dans le système de l'invention. Les moyens 4, 5 de traitement de demande d'accès DAB comprennent un circuit 4 de requête d'accès du processur au bus; ce circuit reçoit le signal DAB indiquant que le processeur 1 correspondant désire accéder au bus. Ce circuit reçoit également un signal BAP indiquant que l'arbitrage est possible. Les moyens de traitement des demandes d'accès comprennent aussi un circuit 5 de transmission d'un signal DBA (demande de bus acceptée) représentatif du verdict d'arbitrage de la demande d'accès (DAB) du processeur correspondant, en fonction des priorités des autres demandes d'accès. Les circuits de requête 4 et de transmission de verdict 5 sont reliés au bus, au processeur 1, ainsi qu'au circuit de gestion de priorités 6.

D'une manière générale, les signaux indiqués sur cette figure sont les suivants:

- DAB: signal indiquant une demande d'accès au bus; ce signal local est délivré par le processeur qui veut accéder au bus pour communiquer avec la méroire 8 par exenple,

- BAP: ce signal indique qu'un arbitrage de l'accès au bus est possible, ce signal apparaît sur le bus commun et onforme tous les ensembles d'arbitrage,

- DBA: demande de bus acceptée. Ce signal local informe un ensemble d'arbitrage que sa demande d'accès au bus est prise en compte et acceptée,

- $\overline{BREQ}$ : signal sur le bus indiquant qu'il y à une requête d'accès à traiter,

- $\overline{BEACH}$ : échange sur le bus; ce signal reste actif durant l'exécution d'un échange sur le bus,

- $\overline{BNA}$ : signal sur le bus; il applique +1 aux circuits de résolution de priorités des ensembles d'arbitrage pour désigner un nouvel ensemble d'arbitrage,

BM1 à BM3: 3 lignes du bus sur lesquelles les signaux forment le numéro encodé du processeur qui accède au bus,

- $\overline{BM4}$: signal de validation actif si son niveau logique est 0; valide les signaux BM1 à BM3,

- $\overline{BAL}$ : signal de synchronisation fourni par le processeur qui accède au bus avec un certain retard sur le signal DBA.

Comme on le verra plus loin en détail, le circuit de transmission de verdict d'arbitrage 5, ainsi que le processeur 1, sont reliés au BUS commun par l'intermédiaire d'un interface 9.

Chaque circuit de résolution de priorités 6 comprend des moyens non représentés, qui seront décrits plus loin plus en détail et qui permettent d'appliquer aux circuits de résolution de priorités des autres ensembles d'arbitrage, des signaux BM1, BM2, BM3, $\overline{BM4}$, désignant l'ensemble d'arbitrage qui sera actif pour la prochaine demande d'accès au bus.

Le circuit 5 de transmission de verdict d'arbitrage comprend des moyens qui seront décrits plus loin et qui permettent à l'ensemble d'arbitrage désigné pour être maître du bus commun, de se reconnaître; dans ce cas, le circuit 5 de transmission de verdict fournit à son processeur un signal DBA qui indique l'acceptation de sa demande d'accès. Sur cette figure, UC0, UC1, UC2 sont des signaux locaux qui soit appliqués au circuit 6 de résolution de priorités pour désigner le numéro du proesseur; les signaux P0, P1, P2 sont des signaux locaux qui définissent les critères de priorités (fixe, rotative ou mixte). Les signaux $\overline{BAL}$, BAP, $\overline{BEACH}$ sont des signaux de service qui seront décrits plus loin en détail et qui sont acheminés sur le bus BUS, par l'interface 9, lorsque le circuit de transmission de verdict d'arbitrage 5 a fourni un signal DBA indiquant que la demande DAB d'accès au bus est acceptée.

Le fonctionnement général du dispositif est le suivant: lorsqu'un processeur 1, par exemple, veut accéder au bus, il applique un signal DAB au circuit 4 de requête d'accès au bus de l'ensemble d'arbitrage 3 correspondant. Le circuit 4 de requête d'accès au bus transmet le signal DAB sur le bus, lorsqu'il y est autorisé par un signal BAP indiquant que l'arbitrage du bus est possible. La transmission du signal DAB sur le bus s'effectue de la manière suivante: un signal $\overline{BREQ}$ à l'état actif, parvient au bus tandis que l'une des lignes BA17 à BA24 est positionnée pour indiquer le numéro du processeur qui est candidat à l'accès au bus.

Le circuit 6 de résolution des priorités mémorise les numéros des processeurs candidats à l'accès au bus; ces numeros sont disponibles comme on l'a mentionné plus haut, sur l'une des lignes BA17 à BA24. Le circuit de résolution de priorité arbitre selon un critère de priorité (fixe et/ou rotative ou les deux à la fois), défini par de signaux de commande P0, P1, P2, les demandes d'accès au bus; il transmet au bus les signaux BM1, BM2, BM3 représentant le verdict d'arbitrage, ainsi que le signal de validation $\overline{BM4}$. Ces signaux sont aussi des signaux que reçoit le circuit de résolution de priorités, en provenance de autres ensembles d'arbitrage. En effet, ces signaux ne permettent au circuit de gestion de priorités considéré d'agir que s'il à été désigné comme ensemble d'arbitrage actif, à la fin de l'échange de données précédent sur le bus. Les signaux $\overline{BREQ}$, $\overline{BAL}$ et $\overline{BEACH}$ sont des signaux de service et de synchronisation du circuit de résolution de priorités.

Le circuit 5 de transmission de verdict d'arbitrage à pour principale fonction de reconnaître si son processeur a ou non un numéro qui correspond à celui du futur ensemble d'arbitrage qui sera maître du bus et qui est désigné par les signaux BM1, BM2, BM3, $\overline{BM4}$. Dans le cas où le numéro du pocesseur correspond au verdict BM1, BM2, BM3, le circuit de transmission de verdict fournit le signal DBA indiquant que la demande d'accès au bus est acceptée. Ce signal est alors appliqué à l'interface 9 entre l'ensemble d'arbitrage et le bus, pour gérer cet accès.

Les circuits 4 de requête d'acces au bus peuvent être actifs dans tous les ensembles d'arbitrage simultanément car tous les processeurs doivent pouvoir demander un accès au bus. Le circuit de résolution de priorités 6 n'est actif que pour l'ensemble d'arbitrage qui est actuellement maître du bus et qui arbitre le prochain échange sur ce bus. Enfin, le circuit de transmission de verdict d'arbitrage 5 est active dans le futur ensemble d'arbitrage qui sera maître du bus et qui se reconnaît en début d'échange sur le bus, pour commander l'échange suivant.

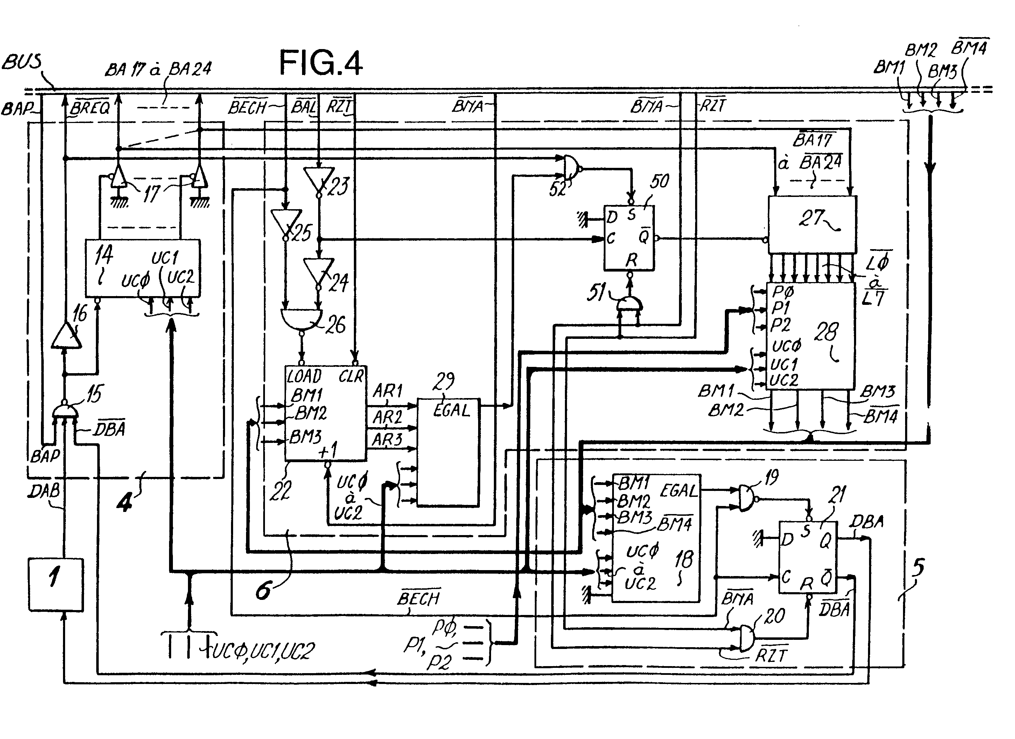

La figure 3 représente schématiquement les moyens de supervision 7 du système d'arbitrage de l'invention; ces moyens sont reliés au circuit 6 de résolution des priorités, par l'intermédiaire du bus, pour appliquer à ce circuit un signal $\overline{BNA}$ de commande de changement d'ensemble d'arbitrage 3, si un verdict d'arbitrage n'est pas rendu dans un délai prédéterminé. Ces moyens de supervision comprennent des moyens de temporisation 10 constitués par une bascule monostable par exemple dont une entrée de déclenchement 11 reçoit le signal $\overline{BREQ}$ émanant du circuit 4 de requête d'accès au bus. La sortie de la bascule 10 est reliée à une entrée d'une porte ET 12 à sortie inversée, une autre entrée de cette porte recevant le signal BAP provenant de l'interface 9 à travers le bus; ce signal indique que l'arbitrage entre les différentes demandes d'accès au bus est possible. Lorsque au bout d'une période prédéterminée, qui est fixée par la bascule 10, le verdict n'est pas rendu et que $\overline{BREQ}$ reste donc actif, la sortie de la porte 12 fournit un signal $\overline{BNA}$. Ce signal est appliqué aux différents ensembles d'arbitrage de système, par l'intermédiaire du bus, pour provoquer la sélection d'un nouvel arbitre. En fait, ce signal permet d'appliquer la valeur -1 sur les circuits de résolution de priorités des ensembles d'arbitrage, pour désigner un nouvel ensemble d'arbitrage.

La figure 4 représente de manière plus détaillée l'un des ensembles 3 d'arbitrage de demande d'accès qui comprend une mémoire PROM 28 de résolution de priorité. Sur cette figure, on distingue le bus qui permet de mettre en communication l'un des processeurs, tel que le processeur 1, avec des ressources non représentées sur cette figure, par l'intermédiaire de l'un des ensembles d'arbitrage. Ces moyens d'arbitrage sont constitués, comme on l'a mentionné plus haut, par un circuit de requête d'accès 4, un circuit de transmission de verdict 5 et un circuit de résolution de priorités 6.

Le circuit de requête d'accès 4 est constitué par un décodeur 14 de type 74LS138, qui permet de passer d'un code à trois éléments binaires à un code à huit éléments binaires. Une porte ET 15, à sortie inversée, à trois entrées, reçoit les signaux BAP indiquant qu'un arbitrage est possible sur le bus, DAB indiquant que le processeur demande un accès au bus et FIG qui n'est fourni à cette porte que lorsque la demande d'accès est acceptée. La sortie de la porte 15 est reliée d'une part à une entrée de validation du décodeur 14 et, d'autre part, à une entrée d'un amplificateur 16 dont la sortie fournit un signal $\overline{BREQ}$. Ce signal indique aux autres ensembles d'arbitrage, qu'au moins l'un des ensembles d'arbitrage à demandé un accès au bus. Le décodeur 14 reçoit également les signaux binaires UC0, UC1, UC2, qui représentent, sous forme binaire, le numéro du processeur correspondant à cet ensemble d'arbitrage qui demande un accès au bus de communication. Les sorties du décodeur 14 sont reliées respectivement aux lignes de transmission BA17 à BA24 par l'intermédiaire d'amplificateurs 17, de sorte que la requête de demande d'accès éventuelle de l'ensemble d'arbitrage considéré soit transmise au bus par l'une de ces lignes de communication qui correspond au numéro de l'ensemble d'arbitrage considéré (qui est d'ailleurs le numéro du processeur correspondant à cet ensemble d'arbitrage). Le décodeur 14 n'est activé que s'il y à une demande d'accès au bus DAB qui n'est pas en cours de satisfaction $\overline{(DBA)}$ et si l'arbitrage est autorisé par le signal BAP. Dans ce cas, l'ensemble d'arbitrage actif est informé par le signal $\overline{BREQ}$ qu'il y à une requête d'accès à traiter dès que possible.

Le circuit de transmission de verdict d'arbitrage 5 comprend un comparateur 18 à quatre éléments binaires du type 74LS85 qui reçoit d'une part le numéro UC0, UC1, UC2 de son processeur correspondant et, d'autre part, les signaux binaires BM1, BM2, BM3, $\overline{BM4}$. Les signaux BM1 à BM3 sont fournis par trois lignes de communication venant du bus et indiquent le numéro du processeur qui va accéder au bus par l'intermédiaire de l'ensemble d'arbitrage qui lui correspond. Le signal $\overline{BM4}$ qui est également fourni par l'une des lignes de communication avec le bus, est un signal de validation qui est actif lorsque son niveau logique est égal à 0 et qui permet de valider les signaux BM1 à BM3. Le circuit logique de transmission de verdict 5 comprend également une porte ET 19 à sortie inversée ainsi qu'une porte ET 20. Les sorties de ces portes sont reliées aux entrées de commande R, S d'une bascule 21 de type RS. Les entrées de la porte 19 sont reliées d'une part à une sortie du comparateur 18 qui fournit un signal d'égalité EGAL et, d'autre part, à une ligne de transmission du bus de communication qui fournit un signal $\overline{BEACH}$ indiquant qu'un échange est exécuté sur le bus de communication. Le comparateur 18 reçoit d'une part les signaux BM1, BM2, BM3, $\overline{BM4}$ et, d'autre part, les signaux UC0, UC1, UC2 mentionnés plus haut. La porte ET 20 reçoit le signal $\overline{BNA}$ provenant du bus de communication; ce signal permet de désigner un nouvel arbitre en appliquant au circuit de gestion de priorités un signal égal à -1. La porte ET 20 reçoit aussi par un signal $\overline{RZT}$ qui est un signal de remise à zéro totale du système. Les sorties Q et $\overline{Q}$ de la bascule 21 sont reliées respectivement à une entrée de la porte ET 15 et à une entrée de commande de l'interface 9, non représenté sur la figure. Ces sorties founissent respectivement le signal DBA qui indique que la demande d'accès au bus est acceptée et le signal $\overline{DBA}$ qui permet, par l'intermédiaire de la porte ET 15, de faire retomber le signal $\overline{BREQ}$ dont la demande est en cours de traitement. Le circuit de transmission de verdict 5 est chargé d'informer l'ensemble d'arbitrage sélectionné par l'arbitrage en cours, qu'il peut accéder au bus. En fin d'échange de données sur le bus de communication, la bascule 21 est mise à 0, dans tous les ensembles d'arbitrage de demande d'accès, par l'intermédiaire du signal $\overline{BEACH}$ fourni par le bus de communication. Seul, l'ensemble d'arbitrage qui est désigné par l'arbitrage en cours se reconnaît par le signal EGAL qui vient forcer la bascule 21 au niveau logique 1, à la fin de l'échange sur le bus de communication. La sortie de la bascule 21 fournit le signal DBA à l'interface 9, pour que celui-ci puisse commencer à effectuer un échange sur le bus.

Le circuit de résolution de priorités 6 comprend un compteur 22 à chargement parallèle; ce compteur bien connu dans l'état de la technique reçoit les signaux BM1, BM2, BM3 qui indiquent le numéro, codé sur trois éléments binaires, du prochain ensemble d'arbitrage; il reçoit également sur ses entrées de commande un signal $\overline{RZT}$ de remise à 0 et le signal $\overline{BNA}$ sur son entrée de comptage. Ce compteur est également relié par son entrée LOAD à un circuit qui comprend les inverseurs 23, 24, 25 et la porte ET 26 à sortie inversée. Ce circuit reçoit les signaux $\overline{BEACH}$ et $\overline{BAL}$ décrits plus haut. Les sorties du compteur 22 sont reliées aux entrées d'un comparateur 29 identique au comparateur 18. Ces sorties fournissent á ce comparateur des signaux AR1, AR2, AR3 représentant le numéro codé sur trois éléments binaires de l'ensemble d'arbitrage désigné pour arbitrer le nouvel échange. Ce comparateur reçoit également sur trois autres entrés le numéro UC0, UC1, UC2 du processeur sur lequel il se trouve. Par principe, c'est l'ensemble d'arbitrage dont le processeur correspondant accède au bus de communction, qui est désigné pour arbitrer l'échange suivant. Le compteur 22 assure la mémorisation du numéro de l'ensemble d'arbitrage désigné, à chaque début d'échange. Ce début d'échange à lieu lorsque le signal $\overline{BEACH}$ est au niveau logique 0. A l'initialisation par le signal $\overline{RZT}$, le compteur est forcé à 0. En cas de défaillance de l'ensemble d'arbitrage, les moyens de supervision qui ont été décrits plus haut fournissent le signal $\overline{BNA}$. Ce signal modifie les signaux AR1, AR2, AR3, entrant dans le comparateur 29, de manière à commander la désignation d'un nouvel ensemble d'arbitrage. Le comparateur permet de n'activer que l'ensemble d'arbitrage dont le numéro UC0, UC1, UC2 est égal au numéro codé par AR1, AR2, AR3. Le circuit de résolution de priorités comprend aussi une bascule 50 de type RS, dont les entrées de commande R et S sont reliées respectivement aux sorties de portes ET 51 et 52. La porte 51 reçoit respectivement sur ses entrées, les signaux $\overline{BNA}$ et $\overline{RZT}$ mentionnés plus haut. La porte 52 reçoit le signal $\overline{BREQ}$ indiquant qu'il y a une demande d'accès au bus de communication, et le signal EGAL de sortie du comparateur 29. La bascule 50 n'est active que pour l'ensemble d'arbitrage désigné par les signaux AR1, AR2, AR3. Cette bascule sert à commander un ensemble de bascules à verrouillage 27. La bascule à verrouillage 27 reçoit sur ses entrées les signaux BA17 à BA24 qui indiquent, comme on l'a vu plus haut, les numéros des processeurs qui ont demandé un accès au bus de communication. La bascule 27 est transparente lorsque le signal $\overline{BREQ}$ qui lui est fourni par l'intermédiaire de la bascule 24 est à un niveau logique 1. La bascule à verrouillage mémorise les demandes $\overline{BA17}$ à $\overline{BA24}$, sur le front descendant du signal BREQ, fourni par la sortie $\overline{Q}$ de la bascule 50. La bascule à verrouillage 27 redevient transparente pour les signaux qu'elle reçoit sur ses entrées, lorsque la bascule 50 est activée sur le front descendant du signal $\overline{BAL}$.

Enfin, le circuit de gestion de priorités comprend également un ensemble de résolution de priorités 28 qui est constitué par une mémoire PROM dans laquelle sont codées les priorités des processeurs. Cette mémoire PROM fournit un verdict de priorité en sortie, en fonction de demandes provenant à ses entrées. L'ensemble 28 reçoit sur ses entrées des signaux $\overline{L0}$, $\overline{L1}$,... $\overline{L7}$ provenant de la bascule à verrouillage 27. Cet ensemble de gestion de priorités fournit en sortie les signaux BM1, BM2, BM3, $\overline{BM4}$ qui permettent d'indiquer le numéro codé de l'ensemble d'arbitrage qui peut accéder au bus de communication.

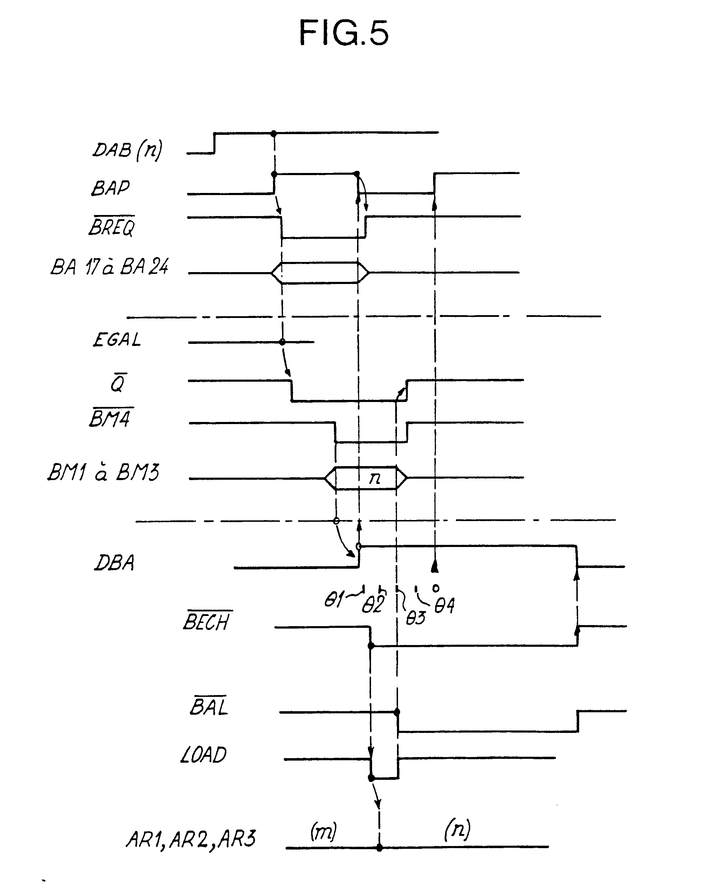

La figure 5 est un chronogramme des principaux signaux qui interviennent dans le système de l'invention. Sur cette figure, on a représenté différents signaux et leur enchaînement, lors de l'arbitrage d'une demande d'accès au bus de communication, cette demande d'accès provenant du processeur et de l'ensemble d'arbitrage de numéro $\underline{n}$. On supposera d'autre part que l'échange précédent à été mené par le processeur $\underline{m}$, ce qui implique que c'est l'ensemble d'arbitrage $\underline{m}$ qui va arbitrer la demande d'accès qui va être décrite en détail. Sur le chronogramme, la demande d'accès au bus de communication, formulée à l'ensemble d'arbitrage n par son processeur, est représentée par le signal DAB. Le passage au niveau logique 1 du signal DAP (arbitrage possible) provoque, d'une part, la mise à l'état actif du signal $\overline{BREQ}$ et, d'autre part, l'activation de l'une des lignes de communication BA17 à BA24 qui correspond au numéro n. Toutes ces actions sont effectuées par le circuit de requête d'accès de l'ensemble d'arbitrage n.

Sur le circuit de résolution de priorités de l'ensemble d'arbitage m, il y à égalité (signal EGAL) entre les signaux AR1, AR2, AR3 et UC0, UC1, UC2; ces signaux représentent deux mots de trois éléments binaires correspondant à la valeur m. Le signal EGAL est celui qui est disponible à la sortie du comparateur 29 sur la figure 4. Ce signal EGAL étant égal à 1, le front descendant du signal $\overline{BREQ}$ va franchir la porte 52 et provoquer, par l'intermédiaire de la sortie $\overline{Q}$ de la bascule 50, le verrouillage des signaux $\overline{BA17}$ à $\overline{BA24}$ Les signaux $\overline{BA17}$ à $\overline{BA24}$ sont ceux qui parviennent à l'entrée de la bascule 27 à verrouillage. L'ensemble de résolution de priorités 28 rend alors un verdict représenté par les signaux BM1, BM2, BM3, ce verdict étant validé par le signal $\overline{BM4}$ Ce verdict, si aucune autre demande d'accès au bus de communication n'est présente, est égal au numéro n de l'ensemble d'arbitrage qui demande l'accès au bus de communication.

Le circuit de transmission de verdict d'arbitrage de l'ensemble d'arbitrage n va alors se reconnaître et délivrer à son processeur le signal DBA, à travers l'interface 9 (figure 2). Ce signal DBA fait passer le signal BAP à l'état inactif (niveau logique 0) et commande le démarrage d'une base de temps ($\theta$1, $\theta$2, $\theta$3, $\theta$4) propre à l'ensemble d'arbitrage n. Cette base de temps n'a pas été représentée sur les figures, pour des commodités de représentation. Elle permet de calibrer tous les signaux émis par l'ensemble d'arbitrage et notamment les signaux $\overline{BEACH}$, BA17 à Ba24, $\overline{BAL}$. Les signaux $\overline{BEACH}$ et $\overline{BAL}$ qui sont créés par la base de temps, sont utilisés pour remettre le signal $\overline{Q}$ de la bascule 50, au niveau logique 1, (état transparent de la bascule 27 à verrouillage) et pour créer une impulsion négative $\overline{LOAD}$ (porte 26, figure 4) qui permet de charger le compteur 22 par la valeur du numéro du futur ensemble d'arbitrage n.

Le système d'arbitrage qui vient d'être décrit permet d'arbitrer les conflits d'accès à un bus sur lequel peuvent être interconnectés jusqu'à huit ensembles d'arbitrage. Le bus est indépendant des processeurs ou des microprocesseurs et peut être multiplexé ou non. L'arbitrage réalisé est décentralisé, parallèle, asynchrone; il est effectué en un temps voisin de 100 nanosecondes. L'intégration du codage de priorités avec mémoire PROM est possible, mais sous un boîtier ne présentant pas un nombre de broches standard, car dans ce cas, la programmation de la mémoire PROM nécessite des broches supplémentaires.

Il est bien évident que dans le système qui vient d'être décrit, les moyens utilisés auraient pu être remplacés par des moyens équivalents, sans sortir du cadre de l'invention.

## Revendications

1. Système d'arbitrage des demandes d'accès de plusieurs processeurs (1, 2) à des ressources communes (3), par l'intermédiaire d'un bus commun (BUS), comprenant pour chaque processeur (1) un ensemble d'arbitrage (3) des conflits de demande d'accès (DAB), cet ensemble (3) d'arbitrage comprenant des moyens de traitement (4, 5) des demandes d'accès (DAB) reliés au bus et au processeur (1), et un circuit de résolution des priorités (6) d'accès, relié au bus, aux moyens de traitement (4, 5) des demandes d'accès et au processeur (1), ce circuit de résolution étant capable d'attribuer aux demandes d'accès (DAB) des priorités fixes, rotatives, ou des priorités à la fois fixes et rotatives, des moyens de traitement des demandes d'accès comprenant un circuit (4) de requête d'accès au bus recevant un signal (DAB) indiquant une demande d'accès du processeur correspondant à l'ensemble d'arbitrage considéré, ainsi qu'un signal $\overline{BREQ}$ indiquant si d'autres processeurs ont effectué une demande d'accès, et un circuit (5) de transmission d'un signal (DBA) représentatif du verdict d'arbitrage de la demande d'accès du processeur (1) correspondant, en fonction des priorités des autres demandes d'accès, ces circuits de requête (4) et de transmission de verdict (5) étant reliés au bus, au processeur (1) et au circuit de résolution de priorités (6) le circuit de transmission (5) de verdict d'arbitrage comprenant des moyens pour reconnaître si l'ensemble d'arbitrage (3) désigné pour être maître du bus correspond à un processeur (1) qui fournit un signal de demande d'accès (DAB) et pour fournir à ce processeur un signal (DBA) indiquant l'acceptation de cette demande, chaque ensemble d'arbitrage (3) comprenant en outre un interface (9) reliant le processeur (1) et le circuit de transmission de verdict d'arbitrage (5) avec le bus, caractérisé en ce que le circuit de résolution de priorité (6) de chaque ensemble d'arbitrage (3) comprend en outre un ensemble de résolution de priorités (28) qui comporte un encodeur à priorité fixe (30) pour coder les demandes d'accès des ensembles d'arbitrage qui fonctionnent en priorité fixe et un encodeur à priorité rotative pour coder les priorités des ensembles d'arbitrage fonctionnant en priorité rotative, cet encodeur à priorité rotative comprenant au moins un encodeur à priorité fixe (32) précédé d'un réseau (33) de brassage circulaire des demandes d'accès et suivi d'un additionneur (34) de la valeur +1 et du numéro

(UC0, UC1, UC2) du processeur qui demande accès au bus, les entrées de l'encodeur à priorité fixe et de l'encodeur à priorité rotative étant reliées aux sorties d'un circuit logique (37) pour aiguiller respectivement vers les encodeurs à priorité fixe et rotative, les demandes des ensembles d'arbitrage qui fonctionnent en priorité fixe et les demandes des ensembles d'arbitrage qui fonctionnent en priorité rotative, chaque circuit de résolution de priorité (6) comprenant des moyens pour appliquer aux circuits de résolution de priorités des autres ensembles d'arbitrage, des signaux (BM1, BM2, BM3, $\overline{BM4}$) désignant l'ensemble d'arbitrage qui sera actif pour la prochaine demande d'accès au bus, le circuit de résolution de priorités comprenant en outre un ensemble de résolution de priorités comprenant au moins une mémoire PROM (28) pour enregistrer et gérer les priorités des ensembles d'arbitrage.

2. Système d'arbitrage selon la revendication 1, caractérisé en ce qu'il comprend en outre des moyens de supervision (7) reliés aux circuits de résolution de priorités (6) par l'intermédiaire du bus, pour appliquer à ces circuits un signal ($\overline{BNA}$) de commande de changement d'ensemble d'arbitrage si un verdict d'arbitrage n'est pas rendu dans un délai prédéterminé.

3. Systeme d'arbitrage selon la revendication 1, caractérisé en ce que les moyens de supervision (7) sont constitués par des moyens de temporisation (10) dont l'entrée est reliée au bus pour recevoir les signaux $\overline{BREQ}$ indiquant que d'autres processeurs ont effectué des demandes d'accès, une sortie de ces moyens de temporisation fournissant le signal de commande de changement d'ensemble d'arbitrage $\overline{BNA}$ aux circuits de résolution de priorités si un verdict d'arbitrage n'est pas rendu dans un délai prédéterminé

4. Système d'arbitrage selon l'une quelconque des revendications 1 à 3, caractérisé en ce que chaque ensemble d'arbitrage est réalisé sous forme d'un circuit intégré sur substrat, enfermés dans un boîtier standard.

**Patentansprüche**

1. Arbitriersystem für Zugriffanforderungen von verschiedenen Prozessoren (1, 2) zu gemeinsamen Betriebsmitteln (3) mittels eines gemeinsamen Buses (BUS), enthaltend für jeden Prozessor (1) eine Arbitrieranordnung (3) für Zugriffsanforderungsüberschneidungen (DAB), wobei diese Arbitrieranordnung (3) Einrichtungen (4, 5) zum Verarbeiten der Zugriffsanforderungen (DAB) aufweist, die mit dem Bus und mit dem Prozessor (1) verbunden sind, und eine Schaltung zur Auflösung der Zugriffsprioritäten (6), die mit dem Bus, den Einrichtungen (4, 5) zur Verarbeitung der Zugriffsanforderungen und mit dem Prozessor (1) verbunden ist, wobei diese Auflösungsschaltung in der Lage ist, den Zugriffsanforderungen (DAB) feste, umlaufende oder zugleich feste und umlaufende Prioritäten zuzuweisen, wobei die Einrichtungen zur Verarbeitung der Zugriffsanforderungen eine Schaltung (4) zur Anforderung eines Zugriffs zum Bus enthält, die ein Signal (DAB) erhält, das eine Zugriffsanforderung vom entsprechenden Prozessor der betrachteten Arbitrieranordnung anzeigt, sowie ein Signal ($\overline{BREQ}$), das anzeigt, wenn andere Prozessoren eine Zugriffsanforderung ausgeführt haben, und eine Schaltung (5) zur Übertragung eines Signals (DBA), das für die Arbitrierentscheidung der Zugriffsanforderung vom entsprechenden Prozessor (1) in Funktion der Prioritäten der anderen Zugriffsanforderungen repräsentativ ist, wobei die Anforderungsschaltung (4) und die Entscheidungsübertragungsschaltung (5) mit dem Bus, dem Prozessor (1) und der Prioritätenauflösungsschaltung (6) verbunden sind, die Arbitrierentscheidungübertragungsschaltung (5) Einrichtungen zum Erkennen aufweist, ob die Arbitrieranordnung (3), die als Geber für den Bus bestimmt ist, einem Prozessor (1) entspricht, der ein Zugriffsanforderungssignal (DAB) liefert, und um an diesen Prozessor ein Signal (DBA) zu liefern, das die Entgegennahme dieser Anforderung anzeigt, wobei jede Arbitrieranordnung (3) darüber hinaus eine Schnittstelle (9) enthält, die den Prozessor (1) und die Arbitrierentscheidungübertragungsschaltung (5) mit dem Bus verbindet, dadurch gekennzeichnet, daß die Prioritätenauflösungsschaltung (6) jeder Arbitrieranordnung (3) darüber hinaus eine Prioritätenauflösungsanordnung (28) enthält, die einen Kodierer fester Priorität (30) zum Kodieren der Zugriffsanforderungen der Arbitrieranordnungen, die in fester Priorität funktionieren, und einen Kodierer umlaufender Priorität zum Kodieren der Prioritäten der Arbitrieranordnungen, die mit umlaufender Priorität funktionieren, enthält, wobei dieser Kodierer umlaufender Priorität mindestens einen Kodierer fester Priorität (32) aufweist, dem ein Netz (33) zur zirkularen Vermischung der Zugriffsanforderungen vorausgeht und dem Addierer (34) für den Wert +1 und für die Zahl (UC0, UC1, UC2) des Prozessors, der Zugriff zum Bus verlangt, folgt, wobei die Eingänge des Kodierers fester Priorität und des Kodierers umlaufender Priorität mit den Ausgängen einer Logikschaltung (37) verbunden sind, um jeweils den Kodierern fester Priorität und umlaufender Priorität die Anforderungen von den Arbitrieranordnungen zuzuführen, die in fester Priorität funktionieren, und die Anforderungen an den Arbitrieranordnungen zuzuführen, die in umlaufender Priorität funktionieren, wobei jede Prioritätsauflösungsschaltung (6) Einrichtungen enthält, um den Prioritätenauflösungsschaltungen der anderen Arbitrieranordnungen Signale (BM1, BM2, BM3, $\overline{BM4}$) zuzuführen, die die Arbitrieranordnung bezeichnen, die für die nächste Zugriffsanforderung zum Bus wirksam sein soll, wobei die Prioritätenauflösungsschaltung darüber hinaus eine Prioritätenauflösungsanordnung enthält, die wenigstens einen PROM-Speicher (28) aufweist, um die Prioritäten der Arbitrieranordnungen zu speichern und zu verwalten.

2. Arbitriersystem nach Anspruch 1, dadurch gekennzeichnet, daß es darüber hinaus Überwachungseinrichtungen (7) enthält, die mit den Prioritätenauflösungsschaltungen (6) über den Bus verbunden sind, um diesen Schaltungen ein Befehlssignal ($\overline{BNA}$) zum Wechseln der Arbitrieranordnung zuzuführen, wenn eine Arbitrierentscheidung nicht in einer vorbestimmten Zeit getroffen wird.

3. Arbitriersystem nach Anspruch 1, dadurch gekennzeichnet, daß die Überwachungseinrichtungen (7) von Zeitbestimmungseinrichtungen (10) gebildet sind, von denen der Eingang mit dem Bus verbunden ist, um die Signale ($\overline{BREQ}$) aufzunehmen, die anzeigen, daß andere Prozessoren Zugriffsanforderungen ausgeführt haben, wobei ein Ausgang dieser Zeitgabevorrichtungen ein Befehlssignal zum Wechseln der Arbitrieranordnung $\overline{BNA}$ an die Prioritätenauflösungsschaltungen liefert, wenn eine Arbitrierentscheidung nicht in einer vorbestimmten Zeit getroffen wird.

4. Arbitriersystem nach einem der Ansprüche 1 bis 3, dadurch gekennzeichnet, daß jede Arbitrieranordnung in Form einer integrierten Schaltung auf einem Substrat realisiert ist, die in einem Standardbehälter eingeschlossen sind.

**Claims**

1. System for the arbitration of demands for access by a plurality of processors (1, 2) to common resources (3), via a common bus (BUS), comprising for each processor (1) an assembly (3) for the arbitration of access demand conflicts (DAB), this arbitration assembly (3) comprising means (4, 5) for the processing of the access demands (DAB), which means are connected to the bus and to the processor (1), and a circuit (6) for the resolution of the access priorities, which circuit is connected to the bus, to the means (4, 5) for the processing of the access demands and to the processor (1), this resolution circuit being capable of allocating to the access demands (DAB) priorities which are fixed or rotating, or priorities which are both fixed and rotating, the means for the processing of the access demands comprising a circuit (4) for requesting access to the bus receiving a signal (DAB) indicating a demand for access from the processor corresponding to the arbitration assembly under consideration, as well as a signal ($\overline{BREQ}$) indicating whether other processors have made a demand for access, and a circuit (5) for the transmission of a signal (DBA) representing the verdict of arbitration of the demand for access from the corresponding processor (1), as a function of the priorities of the other access demands, these circuits for requesting (4) and for the transmission of the verdict (5) being connected to the bus, to the processor (1) and to the circuit for the resolution of priorities (6), the circuit (5) for the transmission of the arbitration verdict comprising means for recognizing whether the arbitration assembly (3) designated to control the bus corresponds to a processor (1) which supplies an access demand signal (DAB) and for supplying to this processor a signal (DBA) indicating the acceptance of this demand, each arbitration assembly (3) further comprising an interface (9) connecting the processor (1) and the arbitration verdict transmission circuit (5) with the bus, characterized in that the circuit (6) for the resolution of priority of each arbitration assembly (3) further comprises an assembly (28) for the resolution of priorities, which includes a fixed-priority encoder (30) for encoding the demands for access from the arbitration assemblies which operate in fixed priority and a rotating-priority encoder for encoding the priorities of the arbitration assemblies operating in rotating priority, this rotating-priority encoder comprising at least one fixed-priority encoder (32) preceded by a network (33) for the circular mixing of the access demands and followed by an adder (34) of the value +1 and of the number (UC0, UC1, UC2) of the processor which demands access to the bus, the inputs of the fixed-priority encoder and of the rotating-priority encoder being connected to the outputs of a logic circuit (37) for switching respectively to the fixed-priority and rotating-priority encoders the demands from the arbitration assemblies which operate in fixed-priority and the demands from the arbitration assemblies which operate in rotating priority, each circuit for the resolution of priority (6) comprising means for applying to the circuits for the resolution of priorities of the other arbitration assemblies, signals (BM1, BM2, BM3, $\overline{BM4}$) designating the arbitration assembly which will be active for the next demand for access to the bus, the circuit for the resolution of priorities further comprising an assembly for the resolution of priorities comprising at least one PROM memory (28) for recording and managing the priorities of the arbitration assemblies.

2. Arbitration system according to Claim 1, characterized in that it further comprises supervision means (7) connected to the circuits for the resolution of priorities (6) via the bus, in order to apply to these circuits a signal ($\overline{BNA}$) for commanding a change of arbitration assembly if an arbitration verdict is not issued within a predetermined period of time.

3. Arbitration system according to Claim 1, characterized in that the supervision means (7) consist of time delay means (10), the input of which is connected to the bus in order to receive the signals ($\overline{BREQ}$) indicating that other processors have made demands for access, one output of these time delay means supplying the signal for commanding a change of arbitration assembly FIG to the circuits for the resolution of priorities if an arbitration verdict is not issued within a predetermined period of time.

4. Arbitration system according to any one of Claims 1 to 3, characterized in that each arbitration assembly is constructed in the form of an integrated circuit on a substrate, which are enclosed within a standard casing.

FIG.1

FIG.3

# FIG.2

EP 0 167 193 B1

FIG.4

# FIG.5